# EUROPÄISCHE PATENTSCHRIFT

(11) **EP 3 034 913 B1**
(45) Veröffentlichungstag und Bekanntmachung des Hinweises auf die Patenterteilung: **15.07.2020**
(21) Anmeldenummer: 15197484.7
(22) Anmeldetag: 02.12.2015
(51) Int. Cl.: F16H 61/425, F16H 61/435, F16H 61/462, F16H 39/04

(54) **ADAPTIVE KENNLINIE FÜR EINE GETRIEBESTEUERUNG**
ADAPTIVE CHARACTERISTICS CURVE FOR A TRANSMISSION CONTROLLER
LIGNE DE REFERENCE ADAPTATIVE D'UNE COMMANDE D'ENGRENAGE

(30) Priorität: 12.12.2014 DE 102014118472
(43) Veröffentlichungstag der Anmeldung: 22.06.2016
(73) Patentinhaber: CLAAS Industrietechnik GmbH, 33106 Paderborn (DE)
(72) Erfinder: Gohde, Thomas, 33181 Bad Wünnenberg (DE)
(74) Vertreter: CLAAS Gruppe

(56) Entgegenhaltungen:
- DE-A1- 2 815 632
- DE-A1- 4 303 243
- US-A1- 2011 088 384
- US-A1- 2013 085 647

## Beschreibung

Die Erfindung betrifft ein Verfahren und eine landwirtschaftliche Arbeitsmaschine gemäß den Oberbegriffen der Ansprüche 1 und 8.

Landwirtschaftliche Fahrzeuge, beispielsweise Traktoren oder selbstfahrende Erntemaschinen, weisen zunehmend Fahrantriebe mit stufenlosen Getrieben auf. Konstruktiv beinhalten solche Getriebe mit stufenlos veränderbarer Übersetzung (gebräuchliche englische Abkürzung auch: "CVT" für continuously variable transmission) unter anderem üblicherweise ein hydrostatisches Getriebe mit zwei hydrostatischen Einheiten oder Hydrostaten, die hydraulisch miteinander verbunden sind, wobei ein Hydrostat als Pumpe und der andere als Motor wirkt. Indem zumindest einer der Hydrostaten ein veränderbares hydraulisches Schluck- bzw. Fördervolumen aufweist, lässt sich das Drehzahlverhältnis zwischen den Wellen von Pumpe und Motor stufenlos verstellen. In Zusammenwirkung des hydrostatischen Getriebes mit einem leistungsverzweigten mechanischen Getriebe ergibt sich zusammen ein stufenloses hydrostatisches Getriebe, bei der sich ein Übersetzungsverhältnis zwischen Eingangsdrehzahl und einer Ausgangsdrehzahl zumindest bereichsweise stufenlos verändern lässt. Mit einer Veränderung des Übersetzungsverhältnisses ändert sich dabei auch die Aufteilung zwischen mechanisch und hydraulisch übertragener Antriebsleistung. Getriebeanordnungen dieser Art sind aus dem Stand der Technik für sich gesehen bekannt. Beispielsweise offenbart die DE 28 15 632 ein hydrostatisches Getriebe mit zwei über eine gemeinsame Anschlussplatte zu einer Baueinheit verbundenen hydrostatischen Einheiten.

Die DE 43 03 243 A offenbart ein Verfahren zum Abgleich der Kennlinien von stufenlos verstellbaren Getrieben einer Arbeitsmaschine mit beidseitigem Fahrantrieb. Bei jedem der zwei Antriebe wird eine Kennlinie erfasst und gespeichert; die Abweichung dieser Kennlinie von einer idealen Kennlinie wird dann zur Ansteuerung kompensiert, um die gleiche Abtriebsdrehzahl bei den zwei Getrieben zu erhalten.

An die Regelgüte dieser stufenlosen, insbesondere hydrostatischen, Getriebe werden grundsätzlich sehr hohe Ansprüche gestellt, so dass eine hohe Fertigungsqualität mit geringen Toleranzen notwendig ist, um die gewünschte hohe Regelgüte dieser stufenlosen Getriebe zu gewährleisten.

Die qualitativ hochwertige Fertigung von Bauteilen mit geringen Toleranzen ist dabei kostenintensiv und führt häufig zu einer erhöhten Ausschussrate. Zudem besteht gerade bei komplexen Bauteilen, wie einem stufenlosen Getriebe, der Nachteil, dass die Einhaltung der geforderten Regelgüte häufig erst nach einer kompletten Montage des Getriebes ermittelt werden kann, wenn alle Bauteile mit ihren tatsächlichen Toleranzen zusammenwirken können, wobei es bei ungünstigen Toleranzlagen der Bauteile zu deutlichen Abweichungen in der Regelgüte des Getriebes kommen kann. Dies hat den Nachteil, dass bei nicht Einhalten der geforderten Regelgüte das gesamte Getriebe unter erhöhten Aufwendungen ausgetauscht werden muss.

Es ist daher die Aufgabe der vorliegenden Erfindung ein Verfahren zur Getriebesteuerung bereitzustellen, welches es auch bei ungünstigen Toleranzlagen der Bauteile eines Getriebes ermöglicht, eine gute Regelgüte zu erreichen.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Verfahren zur Getriebesteuerung für eine landwirtschaftliche Arbeitsmaschine mit einem stufenlosen, insbesondere hydrostatischen, Getriebe, welches einen Aktor zum Einstellen einer Getriebeübersetzung des Getriebes aufweist, einer Steuereinheit zur Ansteuerung des Aktors, sowie mit der Steuereinheit verbundene Sensormittel zur Erfassung einer Stellgröße des Aktors und einer Getriebeübersetzung, wobei in der Steuereinheit eine Basiskennlinie zur Steuerung des Getriebes gespeichert ist, wobei die Basiskennlinie den theoretischen Zusammenhang zwischen der Stellgröße des Aktors und der Getriebeübersetzung darstellt, welches erfindungsgemäß die Verfahrensschritte umfasst, Laden einer in der Steuereinheit hinterlegten Kennlinie beim Starten der landwirtschaftlichen Arbeitsmaschine zur Steuerung des Getriebes, wobei die Werte der geladenen Kennlinie als Soll-Werte angenommen werden, Ermitteln der Ist-Werte der Stellgröße des Aktors und der Getriebeübersetzung, Vergleichen der ermittelten Ist-Werte mit den Soll-Werten der geladenen Kennlinie, Generierung eines Korrekturwertes für die Stellgröße des Aktors basierend auf dem Vergleich der ermittelten Ist- und Soll-Werte, Generierung einer Betriebskennlinie basierend auf den ermittelten Korrekturwerten und der geladenen Kennlinie, Speichern der Betriebskennlinie in der Steuereinheit, wobei beim Start der Arbeitsmaschine jeweils die aktuellste in der Steuereinheit hinterlegte Kennlinie, die Betriebskennlinie, zur Steuerung des Getriebes geladen wird.

Die Steuerung des Getriebes und damit das Einstellen einer, beispielsweise von einem Bediener der landwirtschaftlichen Arbeitsmaschine, gewünschten Getriebeübersetzung erfolgt durch die Steuereinheit, welche die Getriebeübersetzung durch Einregeln einer entsprechenden Stellgröße des Aktors vornimmt. Der Zusammenhang zwischen der Stellgröße des Aktors und der zugehörigen Getriebeübersetzung ist in einer Kennlinie, beispielsweise der Basiskennlinie, in der Steuereinheit hinterlegt, wobei zur Getriebesteuerung eine in der Steuereinheit gespeicherte Kennlinie geladen wird. Aufgrund der Fertigungstoleranzen und deren Paarungen sowie mit den Betriebsstunden steigendem Verschleiß der Bauteile des Getriebes kann es zu Abweichungen zwischen der gemäß geladener Kennlinie eingeregelten Getriebeübersetzung und der tatsächlichen Getriebeübersetzung kommen. Durch die Ermittlung der tatsächlichen Getriebeübersetzung und des zugehörigen Ist-Stellwertes des Aktors wird während des Betriebes des Getriebes eine vorhandene Abweichung von der geladenen Kennlinie ermittelt. Aus der ermittelten Abweichung wird ein Korrekturwert für den Aktor ermittelt, durch welchen die Regelgüte des Getriebes verbessert werden kann. Basierend auf der geladenen Kennlinie und ermittelten Korrekturwerten wird, insbesondere wiederholt, eine neue Betriebskennlinie zur weiteren Getriebesteuerung generiert, durch welche fertigungsbedingte, ungünstige Toleranzlagen kompensiert werden können und so eine hohe Regelgüte erreicht werden kann. Durch die, insbesondere wiederholt, generierte Betriebskennlinie wird eine adaptive Kennlinie generiert, die Veränderungen in der Toleranzlagen der Bauteile des Getriebes fortlaufend während der Nutzungsdauer des Getriebes berücksichtigt und an diese angepasst wird. Dies hat den Vorteil, dass auch im späteren Betrieb des Getriebes gewährleistet werden kann, dass im Falle von Alterungseffekten, beispielsweise Verschleiß, die Regelgüte des Getriebes den Anforderungen entsprechend hoch gehalten werden kann. Weiterhin können durch die verbesserte Regelung des Getriebes der Ausschuß bei der Herstellung und die damit verbundenen Kosten reduziert werden. Indem beim Start der Arbeitsmaschine jeweils die aktuellste in der Steuereinheit hinterlegte Kennlinie, die Betriebskennlinie, zur Steuerung des Getriebes geladen wird, hat dies den Vorteil, dass eine neue Kennlinie nur zu einem definierten Zeitpunkt, dem Start der landwirtschaftlichen Arbeitsmaschine, geladen und zur Steuerung des Getriebes benutzt wird und eine Beeinflussung einer aktuellen Getriebesteuerung durch eine neue Betriebskennlinie vermieden werden kann.

Besonders bevorzugt wird bei dem Speichern der generierten Betriebskennlinie die vorherige, gespeicherte Betriebskennlinie überschrieben. Das Speichern der neuen generierten Betriebskennlinie kann beispielsweise bei einem Abschalten des Antriebsmotors der landwirtschaftlichen Arbeitsmaschine erfolgen oder wenn zwischen Antriebsmotor und Getriebe kein Kraftschluss mehr besteht. Durch das Überschreiben der bereits gespeicherten Betriebskennlinie durch die neue Betriebskennlinie kann der benötigte Speicherplatz in dem Steuergerät gering gehalten werden. Die Basiskennlinie wird nicht überschrieben und bleibt neben der, bei jeder Nutzung der Arbeitsmaschine neu generierten, Betriebskennlinie, abrufbar. Dies hat den Vorteil, dass beispielsweise bei einer fehlerhaften Betriebskennlinie eine Getriebesteuerung basierend auf der Basiskennlinie ermöglicht werden kann.

In einer bevorzugten Ausgestaltung der Erfindung erfolgen die Ermittlung des Stellwertes des Aktors und die zugehörige Getriebeübersetzung zyklisch. Die Ermittlung des Stellwertes des Aktors und der zugehörigen Getriebeübersetzung kann dabei während des Betriebs der landwirtschaftlichen Arbeitsmaschine zyklisch zu definierten Zeitpunkten und/oder in vorgegebenen Zeitintervallen erfolgen. Zudem kann zur Generierung einer neuen Betriebskennlinie die tatsächliche Getriebeübersetzung einmalig oder wiederholt bei Erreichen definierter Stellwerte des Aktors ermittelt werden. Hierbei können im Wesentlichen der gesamte Stellwert-Bereich des Aktors, insbesondere schrittweise, durchfahren und die jeweiligen Getriebeübersetzungen ermittelt werden. Die zyklische Ermittlung des Stellwertes und der zugehörigen Getriebeübersetzung hat den Vorteil, dass eine Vielzahl an Messpunkten mit entsprechenden Korrekturwerten zur Generierung einer präziseren Betriebskennlinie verfügbar ist, wodurch die Regelgüte erhöht werden kann.

In einer weiterhin bevorzugten Ausgestaltung der Erfindung wird ein ermittelter Korrekturwert für die Stellgröße des Aktors nur berücksichtigt, wenn das Getriebe kraftschlüssig mit dem Antriebsmotor und mindestens einer Achse geschaltet ist, das Getriebe in vorgegebenen Grenzen lastlos ist und/oder dynamische Vorgänge in dem Getriebe abgeklungen sind. Die Berücksichtigung der ermittelten Korrekturwerte bei Einhaltung der genannten Voraussetzungen hat den Vorteil, dass betriebsbedingte Einflüsse auf die Korrekturwerte und damit auf die zu Generierende Betriebskennlinie minimiert werden und die so Ermittelten Korrekturwerte unter vergleichbaren Bedingungen entstanden sind, so dass die Qualität der neuen Betriebskennlinie weiter verbessert werden kann und die Regelgüte weiter erhöht werden kann.

In einer besonders bevorzugten Ausgestaltung der Erfindung wird ein ermittelter Korrekturwert für die Stellgröße des Aktors nur berücksichtigt, wenn die Abweichung des Korrekturwertes zur Basiskennlinie innerhalb einer vorgegeben Grenze liegt und/oder die Steigung der Basiskennlinie in einer vorgegebenen Grenze eingehalten wird. Die Berücksichtigung der ermittelten Korrekturwerte bei Einhaltung einer vorgegebenen Grenze, oder eines Abstandes, bezogen auf die Basiskennlinie bietet den Vorteil, dass zu starke Abweichungen der neuen Betriebskennlinie vermieden werden können. Durch die Vorgabe einer Begrenzung der Steigung der neuen Betriebskennlinie können starke Schwankungen im Verlauf der neuen Betriebskennlinie vermieden und ein harmonischerer Verlauf der Kennlinie ermöglicht werden, so dass starke Schwankungen in der Getrieberegelung vermieden werden und die Regelgüte weiter erhöht werden können.

In einer besonders bevorzugten Ausgestaltung der Erfindung weisen die vorgegebenen Grenzen einen einheitlichen oder variablen Wert bezogen auf die Basiskennlinie auf. Die vorgegebene Grenze und/oder die Steigung können entlang des Verlaufs der Basiskennlinie im Wesentlichen konstant oder variabel sein. Dies hat den Vorteil, dass die Grenzen der neu zu generierenden Betriebskennlinie präzise vorgegeben werden können, so dass beispielsweise in unterschiedlichen Bereichen der Betriebskennlinie unterschiedliche Abweichungen von der Basiskennlinie zulässig sind.

Vorzugsweise wird für einen Korrekturwert ein Grenzwert vorgegeben, wobei bei Überschreiten des Grenzwertes ein Hinweis auf die Überschreitung ausgegeben wird. Durch die Vorgabe eines Grenzwertes für den ermittelten Korrekturwert und den Hinweis auf dessen Überschreiten, kann, je nach Wahl des Grenzwertes, frühzeitig ein Hinweis auf eine bevorstehende Beeinträchtigung der Regelgüte des Getriebes gegeben werden. Dabei kann die Überschreitung des Grenzwertes beispielsweise durch auftretenden Verschleiß der Bauteil des Getriebes verursacht werden, so dass eine frühzeitige Wartung des Getriebes vor einer Abnahme der Regelgüte ermöglicht wird.

Die Erfindung betrifft ferner eine landwirtschaftliche Arbeitsmaschine, insbesondere zur Durchführung des wie vorstehend beschriebenen Verfahrens, mit einem stufenlosen, insbesondere hydrostatischen, Getriebe, welches einen Aktor zum Einstellen einer Getriebeübersetzung des Getriebes aufweist, einer Steuereinheit zur Ansteuerung des Aktors, sowie mit der Steuereinheit verbundene Sensormittel zur Erfassung einer Stellgröße des Aktors und einer Getriebeübersetzung, wobei in der Steuereinheit eine Basiskennlinie zur Steuerung des Getriebes speicherbar ist, wobei die Basiskennlinie den theoretischen Zusammenhang zwischen der Stellgröße des Aktors und der Getriebeübersetzung darstellt, wobei erfindungsgemäß die Steuereinheit derart ausgebildet und ausgestaltet ist, dass eine in der Steuereinheit hinterlegte Kennlinie beim Starten der landwirtschaftlichen Arbeitsmaschine zur Steuerung des Getriebes geladen wird, wobei die Werte der geladenen Kennlinie als Soll-Werte angenommen werden, Ist-Werte der Stellgröße des Aktors und der Getriebeübersetzung ermittelt werden, die ermittelten Ist-Werte mit den Soll-Werten der geladenen Kennlinie verglichen werden, ein Korrekturwert für die Stellgröße des Aktors basierend auf dem Vergleich der ermittelten Ist- und Soll-Werte generiert wird, eine Betriebskennlinie basierend auf den ermittelten Korrekturwerten und der geladenen Kennlinie generiert wird, und die Betriebskennlinie in der Steuereinheit gespeichert wird.

In einer bevorzugten Ausgestaltung der Erfindung weist der Aktor eine drehbare Verstellwalze zur Steuerung des Getriebes auf, wobei die Stellgröße des Aktors der Drehwinkel der Verstellwalze ist. Der Aktor zur Verstellung der Verstellwalze kann in Form einer elektrischen Servoeinheit ausgebildet sein. Die Verstellwalze kann umfangsseitig zur Aufnahme von Steuermitteln Steuernuten aufweisen, über welche bei einer Rotation der Verstellwalze in einen bestimmten Drehwinkel, eine zugehörige Getriebeübersetzung des Getriebes einstellbar ist.

In einer besonders bevorzugten Ausgestaltung der Erfindung ist das Sensormittel zur Erfassung der Stellgröße des Aktors ein Drehwinkelsensor und zur Erfassung der Getriebeübersetzung sind jeweils ein Drehzahlsensor für die Eingangsdrehzahl und die Ausgangsdrehzahl des Getriebes vorgesehen. Über den Drehwinkelsensor kann direkt der Drehwinkel des Aktors ermittelt werden. Die tatsächliche Getriebeübersetzung kann, beispielsweise durch die Steuereinheit, aus den Eingangs- und Ausgangsdrehzahlen ermittelt werden, welche von den Drehzahlsensoren erfasst werden.

Besonders bevorzugt ist das Getriebe ein stufenloses hydrostatisches Getriebe, und ist mindestens ein Drucksensor in einem geschlossenen Hydraulikkreislauf des Getriebes vorgesehen. Das stufenlose hydrostatische Getriebe kann zwei durch den Aktor regelbare Hydrostaten zur Einstellung der Getriebeübersetzung aufweisen, wobei die Hydrostaten über einen geschlossenen Hydraulikkreislauf miteinander verbunden sind. Mittels eines Drucksensors in dem Hydraulikkreislauf kann der lastfreie Zustand des Getriebes besonders zuverlässig ermittelt werden.

Nachfolgend wird die Erfindung unter Bezugnahme auf die anliegenden Zeichnungen näher erläutert.

Es zeigen:
- Fig. 1:: eine schematische Seitenansicht einer landwirtschaftlichen Arbeitsmaschine;
- Fig. 2:: eine schematische, perspektivische Ansicht eines stufenlosen hydrostatischen Getriebes;
- Fig. 3:: eine Darstellung eines Ablaufdiagramms des Verfahrens;
- Fig. 4:: eine Darstellung einer Basiskennlinie zusammen mit einer Betriebskennlinie zur Getriebesteuerung; und
- Fig. 5:: eine Darstellung der Kennliniendifferenz zwischen der in Fig. 4 gezeigten Basiskennlinie und der Betriebskennlinie.

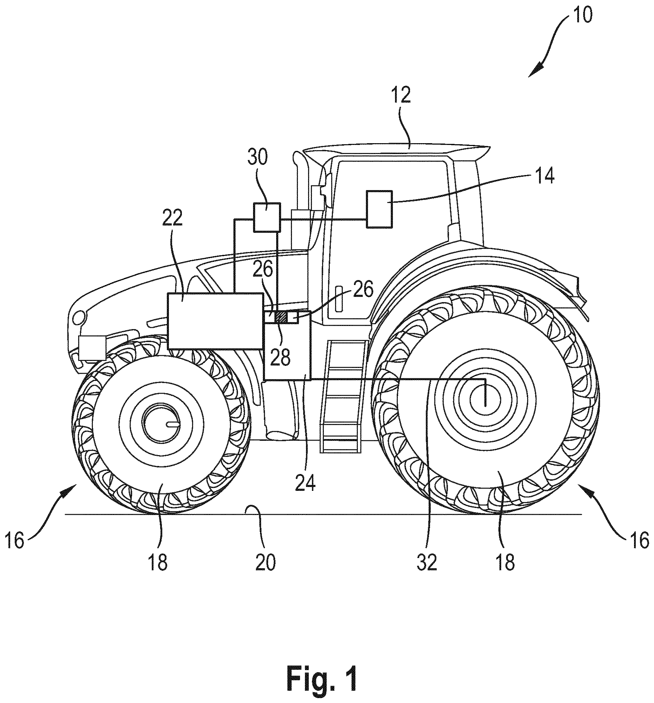

In Fig. 1 ist eine landwirtschaftliche Arbeitsmaschine 10 in Form eines Traktors schematisch von der Seite dargestellt, wobei der grundsätzliche Aufbau eines Traktors als dem Fachmann bekannt angenommen wird. Eine landwirtschaftliche Arbeitsmaschine 10 im Sinne der Erfindung kann jedes zur landwirtschaftlichen Arbeit einsetzbare Fahrzeug sein, beispielsweise ein Traktor, ein Teleskoplader, eine Baumaschine oder eine selbstfahrende Erntemaschine. Der Traktor weist zur Aufnahme eines Bedieners eine geschlossene Fahrerkabine 12 auf, wobei innerhalb der Fahrerkabine 12 Anzeige- und Bedienelemente 14 zur Bedienung der landwirtschaftlichen Arbeitsmaschine 10 angeordnet sind, beispielsweise in Form eines Fahrpedals oder Fahrhebels zur Regelung der Fahrgeschwindigkeit. Die landwirtschaftliche Arbeitsmaschine 10 weist mehrere, an einer Vorderachse und einer Hinterachse angeordnete Räder 16 auf. Die Räder 16 weisen dabei jeweils luftgefüllte Reifen 18 auf, welche mit einem Boden 20, insbesondere zur Übertragung von Antriebskräften, in Eingriff stehen. Die Räder 16 werden durch einen Antriebsmotor 22, welcher in Form eines Verbrennungsmotors ausgebildet ist, und einem mit diesem zusammenwirkenden Getriebe 24 angetrieben. Das Getriebe 24 ist dabei in Form eines stufenlosen, hydrostatischen leistungsverzweigten Getriebes ausgebildet, welches in dem hydraulischen Leistungszweig zwei Hydrostaten 26, auch hydrostatische Verstellpumpen genannt, zur Bestimmung der Getriebeübersetzung aufweist, welche über einen Aktor 28 angesteuert werden. Von einem Bediener über die Bedienelemente 14 getätigten Vorgaben zur Geschwindigkeit der landwirtschaftlichen Arbeitsmaschine 10 werden in einer Steuereinheit 30 umgesetzt und der Antriebsmotor 22 sowie das Getriebe 24 entsprechend den Vorgaben geregelt, um die gewünschte Geschwindigkeit zu erreichen. Ein Abtriebsdrehmoment des Getriebes 24 wird über einen Antriebsstrang 32, welcher nur schematisch dargestellt ist, auf die Räder 16 zur Fortbewegung der Arbeitsmaschine übertragen.

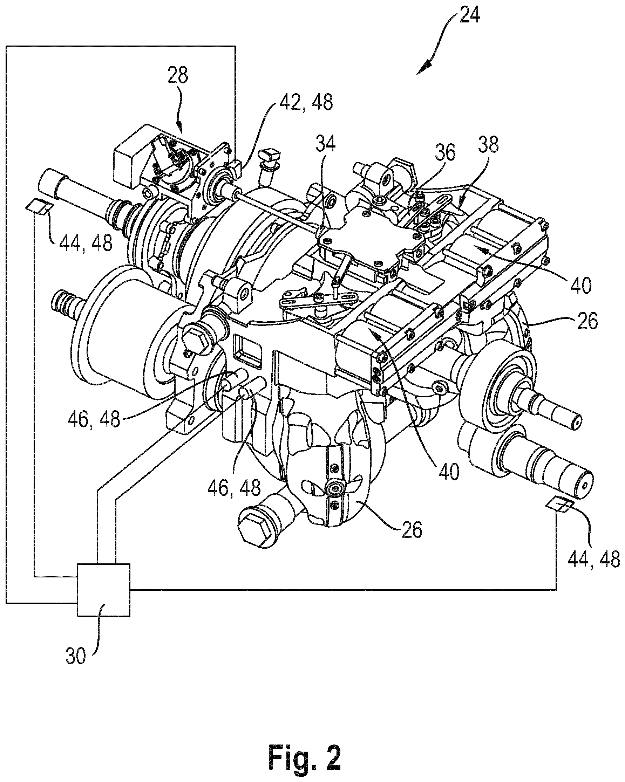

Das stufenlose hydrostatische Getriebe 24 ist in Fig. 2 in einer perspektivischen Ansicht dargestellt. Der durch die Steuereinheit 30 ansteuerbare Aktor 28, beispielsweise in Form einer elektrischen Servoeinheit, ist über eine Mechanik mit den Hydrostaten 26 gekoppelt, wobei über den Aktor 28 der Schwenkwinkel und damit das Hubvolumen der Hydrostaten 26 bestimmt wird, wodurch die Übersetzung des Getriebes 24 einstellbar ist. Die Verstellung der Hydrostaten 26 erfolgt durch eine Rotation des Aktors 28, wodurch ein Drehwinkel einer Verstellwalze 34 der Mechanik bestimmt wird. Die Verstellwalze 34 wirkt über Nutkulissen (nicht dargestellt) mit Stellhebeln 36 zusammen, deren Position sich bei einem Verdrehen der Verstellwalze 34 ändert. Über die Positionsänderung der Stellhebel 36 werden Servoventile 38 betätigt, welche mittels eines Druckfluids die Position von Verstellkolben 40 bestimmen und zusammen mit diesen auch die Hydrostaten 26 verstellen und um einen Schwenkwinkel verschwenken. Durch eine Übertragung der Schwenkwinkel der Hydrostaten 26 auf die Stellhebel 36 wird die Position der Servoventile 38 wieder in Richtung schließen gebracht und die Verstellung kommt in der veränderten Position in den Ruhezustand zurück. Die Schwenkwinkel der Hydrostaten 26 und damit die Getriebeübersetzung des Getriebes 24 wird somit durch den Drehwinkel des Aktors 22 bestimmt. Die durch einen bestimmten Schwenkwinkel des Aktors 28 einstellbare Getriebeübersetzung weicht in der Praxis jedoch von dem theoretischen Zusammenhang ab, so dass die Hydrostaten 26 nicht so verschwenkt werden, wie es zum Einstellen der gewünschten Getriebeübersetzung nötig wäre. Dies kann beispielsweise durch fertigungsbedingte oder verschleißbedingte Abweichungen in den Toleranzen der Bauteile des Getriebes 24 begründet sein. Zudem beeinflusst die Leckage des Druckfluids an den Hydrostaten 26 die eingestellte Getriebeübersetzung und führt zu Abweichungen zwischen dem eingeregelten Drehwinkel des Aktors 28 und der tatsächlichen Getriebeübersetzung.

Zur Verringerung der störenden Einflüsse und zur Erhöhung der Regelgüte des Getriebes 24 ist erfindungsgemäß vorgesehen, durch einen Vergleich der tatsächlichen Getriebeübersetzung bei einem definierten Stellwinkel des Aktors 28 mit den Soll-Werten einen Korrekturwert für die Stellgröße des Aktors 28 und eine neue Betriebskennlinie zur Steuerung des Getriebes 24 zu generieren.

Die Steuerung des Getriebes 24 und damit das Einstellen einer, beispielsweise von dem Bediener der landwirtschaftlichen Arbeitsmaschine 10 gewünschten Getriebeübersetzung erfolgt durch die Steuereinheit 30, welche die Getriebeübersetzung durch Einregeln einer entsprechenden Stellgröße, beispielsweise dem Drehwinkel, des Aktors 28 vornimmt. Der Zusammenhang zwischen der Stellgröße des Aktors 28 und der zugehörigen Getriebeübersetzung ist dabei in einer Kennlinie, beispielsweise der Basiskennlinie BK, in der Steuereinheit 30 hinterlegt.

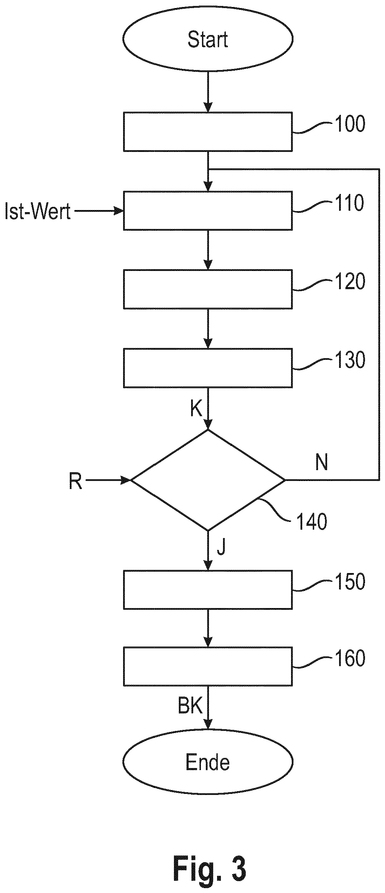

In Fig. 3 ist ein Ablaufdiagramm des erfindungsgemäßen Verfahrens dargestellt. In einem ersten Schritt 100 wird eine in der Steuereinheit 30 hinterlegte Kennlinie zur Getriebesteuerung, beispielsweise von der Steuereinheit 30, geladen. Dabei wird jeweils die aktuellste zur Verfügung stehende Kennlinie geladen. Bei einer ersten Inbetriebnahme des Getriebes 24, und insbesondere der landwirtschaftlichen Arbeitsmaschine 10, wird eine Basiskennlinie geladen, welche beispielsweise dauerhaft in der Steuereinheit 30 hinterlegt ist. Die Basiskennlinie entspricht dabei dem theoretischen Zusammenhang zwischen der Stellgröße, insbesondere dem Drehwinkel, des Aktors 28 und der Übersetzung des Getriebes 24. Dabei sind die Toleranzen der Bauteile und die Leckage in den Hydrostaten 26 zu Null angenommen, sowie dass alle dynamischen Einflüsse in dem Getriebe 24 abgeklungen sind. Die Werte der Kennlinie für den Drehwinkel des Aktors 28 sowie die zugehörige Getriebeübersetzung werden als Soll-Werte angenommen. Während des Betriebs des Getriebes 24 werden in einem zweiten Schritt 120 zyklisch die Ist-Werte des Drehwinkels des Aktors 28 und die zugehörige tatsächliche Getriebeübersetzung ermittelt und in einem dritten Verfahrensschritt 130 mit den Soll-Werten der Basiskennlinie verglichen. Zur Erfassung der Ist-Werte sind unterschiedliche Sensormittel 48 vorgesehen. Der Drehwinkel des Aktors 28 und damit auch der Verstellwalze 34 kann über einen Drehwinkelsensor 42 ermittelt werden. Die tatsächliche Getriebeübersetzung kann aus dem Verhältnis der tatsächlichen Eingangs- und Ausgangsdrehzahl des Getriebes 24 ermittelt werden, wobei zur Messung der Eingangs- und Ausgangsdrehzahl jeweils ein Drehzahlsensor 44 an der entsprechenden Welle vorgesehen ist. Wird bei dem Vergleich der Ist-Werte mit den Soll-Werten eine Abweichung festgestellt, wird in einem vierten Schritt 140 ein Korrekturwert K für den Drehwinkel des Aktors 28 ermittelt, durch dessen Addition oder Subtraktion von dem Soll-Wert die gewünschte Getriebeübersetzung einstellbar ist. Diese Korrekturwerte K werden in einem fünften Schritt 160 ausgehend von der geladenen Kennlinie zur Generierung einer neuen Kennlinie, der Betriebskennlinie, genutzt. Die ermittelten Korrekturwerte K werden jedoch nur dann berücksichtigt, wenn eine oder mehrere, vorzugsweise alle, der folgenden Regeln R eingehalten werden. Dies wird in einem ersten Entscheidungsschritt 150 ermittelt.

Das Getriebe 24 soll kraftschlüssig mit dem Antriebsmotor 22 und mindestens einer Antriebsachse, beispielsweise der Hinterachse, des Antriebsstranges 32 verbunden sein, so dass nur Korrekturwerte K für einen tatsächlichen Fahrzustand des Getriebes 24 berücksichtigt werden. Dieser Zustand kann beispielsweise über eine Zustandsüberwachung ermittelt werden. Weiterhin soll das Getriebe 24, insbesondere innerhalb vorgegebener Grenzen, in einem lastlosen Zustand sein. Zur Ermittlung des lastlosen Zustandes des Getriebes 24 können Drucksensoren 46 an dem geschlossenen hydraulischen Kreislauf der Hydrostaten 26 vorgesehen sein. Da die Hydrostaten 26 über zwei hydraulische Leitungen miteinander verbunden sind, kann vorteilhafterweise an jeder Leitung ein Drucksensor 46 angeordnet sein, so dass anhand der ermittelten Drücke ein lastloser Zustand der Hydrostaten 26 und damit des Getriebes 24 ermittelt werden kann. Weiterhin sollen dynamische Vorgänge des Getriebes 24 abgeklungen sein, also ein im Wesentlicher konstanter Zustand, beispielsweise ohne weitere Beschleunigung oder Verzögerung, erreicht sein. Durch diese Regeln R können äußere Einflüsse auf den Korrekturwert K reduziert werden und im Wesentlichen vergleichbare Bedingungen für die ermittelten Korrekturwerte K erreicht werden, und somit die mit der zu generierenden Betriebskennlinie erreichbare Regelgüte des Getriebes 24 verbessert werden kann.

Die Korrekturwerte K selber sollen ebenfalls bestimmte Bedingungen erfüllen, damit diese berücksichtigt werden. So soll eine Abweichung des ermittelten Korrekturwertes K zur Basiskennlinie innerhalb einer vorgegebenen Grenze, beispielsweise unterhalb eines Grenzwertes, bleiben. Dadurch können beispielsweise auf einem Messfehler beruhende Ausreißer vernachlässigt werden, welche ansonsten zu einem schädlichen Regelverhalten des Getriebes 24 führen könnten. Weiterhin soll die Steigung, welche sich in der zu generierenden Betriebskennlinie zwischen zwei benachbarten Korrekturwerten K ergibt, die Steigung der theoretischen Basiskennlinie in vorgegebenen Grenzen einhalten. So soll die Steigung zwischen zwei benachbarten Korrekturwerten beispielsweise kleiner als 4° von der Basiskennlini e abweichen, wodurch ein harmonischer Verlauf der neuen Betriebskennlinie erreicht werden kann. Jene Korrekturwerte K, welche obige Regeln R einhalten, werden in dem fünften Verfahrensschritt 150 bei der Generierung der neuen Betriebskennlinie berücksichtigt. Die generierte Betriebskennlinie wird in der Steuereinheit 30 gespeichert, wobei das Abspeichern nach einem Abschalten des Antriebsmotors 22 der landwirtschaftlichen Arbeitsmaschine 10 erfolgt. Beim Speichern wird eine bereits vorhandene Betriebskennlinie überschrieben, so dass in bei dem nächsten Start der Arbeitsmaschine 10 neben der Basiskennlinie die jeweils aktuellste Betriebskennlinie, die dann auch bei Start geladen werden soll, vorhanden sind. Dadurch kann vermieden werden, die aktuelle Regelung durch die neue Betriebskennlinie zu beeinflussen. Je nach Größe der Abweichung zur Basiskennlinie bei einer ersten Inbetriebnahme kann die Getrieberegelung nach einigen Testzyklen oder Fahrmanövern der Arbeitsmaschine 10 die geforderte Regelgüte erreichen. Besonders vorteilhaft ist, dass durch das erfindungsgemäße Verfahren die hohe Regelgüte auch bei alterungsbedingten Veränderungen, beispielsweise Verschleiß, in dem Getriebe 24 kontinuierlich gewährleistet werden kann.

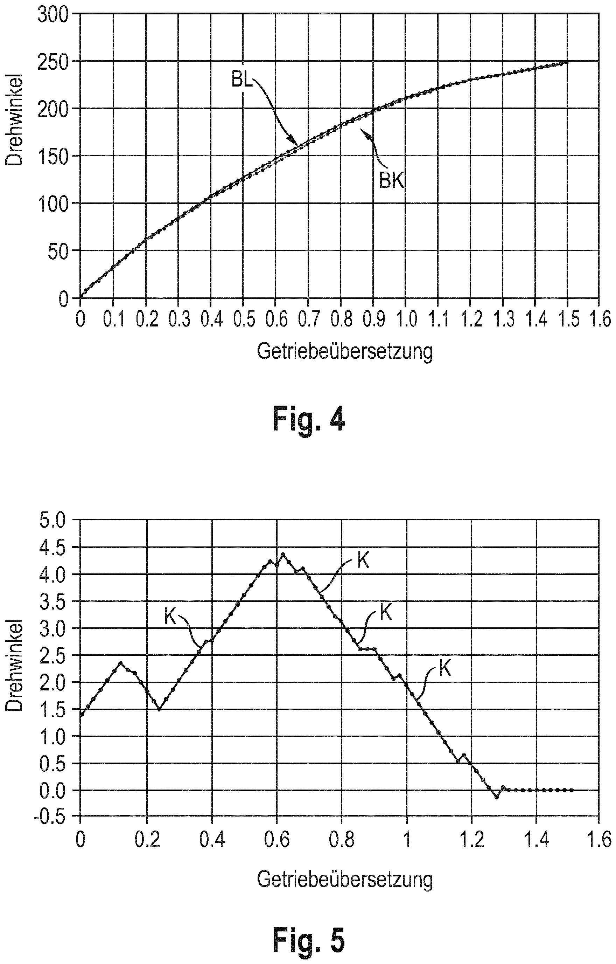

Ein Beispiel einer Basiskennlinie BL, welche den theoretischen Zusammenhang zwischen dem Drehwinkel des Aktors 28 und der zugehörigen Getriebeübersetzung abbildet, ist in Figur 4 dargestellt. Neben der Basiskennlinie BL ist auch eine Betriebskennlinie BK dargestellt. Die Betriebskennlinie BK zeigt dabei in einem Bereich, in dem der Wert der Getriebeübersetzung ungefähr o,5 beträgt, Abweichungen zur Basiskennlinie BL auf. Aus diesen Abweichungen können Korrekturwerte K ermittelt werden, welche zu Auswertungszwecken in einem in Figur 5 dargestellten Diagramm zusammengefasst werden können, wobei erkennbar ist, dass die Korrekturwerte des Drehwinkel des Aktors 28 in dem Bereich, in dem die Getriebeübersetzung einen Wert von 0,5 aufweist, am größten sind. Durch eine wiederholte Sicherung der Betriebskennlinie, beispielsweise bei der Wartung der Arbeitsmaschine 10, kann die Entwicklung der Korrekturwerte nachverfolgt werden, so dass beispielsweise bei Verschleiß frühzeitig durch entsprechende Wartung ein Ausfall des Getriebes 24 vermieden werden kann.

### Bezugszeichenliste

- 10: landwirtschaftliche Arbeitsmaschine
- 12: Fahrerkabine
- 14: Anzeige- und Bedienelemente
- 16: Räder
- 18: Reifen
- 20: Boden
- 22: Antriebsmotor
- 24: Getriebe
- 26: Hydrostaten
- 28: Aktor
- 30: Steuereinheit
- 32: Antriebsstrang
- 34: Verstellwalze
- 36: Stellhebel
- 38: Servoventil
- 40: Verstellkolben
- 42: Drehwinkelsensor
- 44: Drehzahlsensor
- 46: Drucksensor
- 48: Sensormittel

- BL: Basiskennlinie
- BK: Betriebskennlinie
- R: Regel
- K: Korrekturwert

## Patentansprüche

1. Verfahren zur Getriebesteuerung für eine landwirtschaftliche Arbeitsmaschine (10) mit einem stufenlosen, insbesondere hydrostatischen, Getriebe (24), welches einen Aktor (28) zum Einstellen einer Getriebeübersetzung des Getriebes (24) aufweist, einer Steuereinheit (30) zur Ansteuerung des Aktors (28), sowie mit der Steuereinheit (30) verbundene Sensormittel (48) zur Erfassung einer Stellgröße des Aktors (28) und einer Getriebeübersetzung, wobei in der Steuereinheit (30) eine Basiskennlinie (BL) zur Steuerung des Getriebes (24) gespeichert ist, wobei die Basiskennlinie (BL) den theoretischen Zusammenhang zwischen der Stellgröße des Aktors (28) und der Getriebeübersetzung darstellt,
**gekennzeichnet durch** die Verfahrensschritte
- Laden einer in der Steuereinheit (30) hinterlegten Kennlinie (BL, BK) beim Starten der landwirtschaftlichen Arbeitsmaschine (10) zur Steuerung des Getriebes (24), wobei die Werte der geladenen Kennlinie (BL, BK) als Soll-Werte angenommen werden,
- Ermitteln der Ist-Werte der Stellgröße des Aktors (28) und der Getriebeübersetzung,
- Vergleichen der ermittelten Ist-Werte mit den Soll-Werten der geladenen Kennlinie (BL, BK),
- Generierung eines Korrekturwertes (K) für die Stellgröße des Aktors (28) basierend auf dem Vergleich der ermittelten Ist- und Soll-Werte,
- Generierung einer Betriebskennlinie (BK) basierend auf den ermittelten Korrekturwerten (K) und der geladenen Kennlinie (BL, BK),
- Speichern der Betriebskennlinie (BK) in der Steuereinheit, wobei bei einem Start der Arbeitsmaschine (10) jeweils die aktuellste in der Steuereinheit (30) hinterlegte Kennlinie (BL, BK), die Betriebskennlinie (BK), zur Steuerung des Getriebes (24) geladen wird.

2. Verfahren nach Anspruch 1, **dadurch gekennzeichnet, dass** bei dem Speichern der generierten Betriebskennlinie (BK) die vorherige, gespeicherte Betriebskennlinie (BK) überschrieben wird.

3. Verfahren nach einem der vorherigen Ansprüche, **dadurch gekennzeichnet, dass** die Ermittlung des Stellwertes des Aktors (30) und die zugehörige Getriebeübersetzung zyklisch erfolgen.

4. Verfahren nach einem der vorherigen Ansprüche, **dadurch gekennzeichnet, dass** ein ermittelter Korrekturwert (K) für die Stellgröße des Aktors (28) nur berücksichtigt wird, wenn das Getriebe (24) kraftschlüssig mit dem Antriebsmotor (22) und mindestens einer Achse geschaltet ist, das Getriebe (24) in vorgegebenen Grenzen lastlos ist und/oder dynamische Vorgänge in dem Getriebe (24) abgeklungen sind.

5. Verfahren nach einem der vorherigen Ansprüche, **dadurch gekennzeichnet, dass** ein ermittelter Korrekturwert (K) für die Stellgröße des Aktors (30) nur berücksichtigt wird, wenn die Abweichung des Korrekturwertes (K) zur Basiskennlinie (BL) innerhalb einer vorgegeben Grenze liegt und/oder die Steigung der Basiskennlinie (BL) in einer vorgegebenen Grenze eingehalten wird.

6. Verfahren nach einem der Ansprüche 4 oder 5, **dadurch gekennzeichnet, dass** die vorgegebenen Grenzen einen einheitlichen oder variablen Wert bezogen auf die Basiskennlinie (BL) aufweisen.

7. Verfahren nach einem der vorherigen Ansprüche, **dadurch gekennzeichnet, dass** für einen Korrekturwert (K) ein Grenzwert vorgegeben wird, wobei bei Überschreiten des Grenzwertes ein Hinweis auf die Überschreitung ausgegeben wird.

8. Landwirtschaftliche Arbeitsmaschine, insbesondere zur Durchführung des Verfahrens nach einem der Ansprüche 1 bis 7, mit einem stufenlosen, insbesondere hydrostatischen, Getriebe (24), welches einen Aktor (28) zum Einstellen einer Getriebeübersetzung des Getriebes (24) aufweist, einer Steuereinheit (30) zur Ansteuerung des Aktors (28), sowie mit der Steuereinheit (30) verbundene Sensormittel (48) zur Erfassung einer Stellgröße des Aktors (28) und einer Getriebeübersetzung, wobei in der Steuereinheit (30) eine Basiskennlinie (BL) zur Steuerung des Getriebes (24) speicherbar ist,
**dadurch gekennzeichnet, dass**
die Steuereinheit (30) derart ausgebildet und ausgestaltet ist, dass eine in der Steuereinheit (30) hinterlegte Kennlinie (BL, BK) beim Starten der landwirtschaftlichen Arbeitsmaschine (10) zur Steuerung des Getriebes (24) geladen wird, wobei die Werte der geladenen Kennlinie (BL, BK) als Soll-Werte angenommen werden, Ist-Werte der Stellgröße des Aktors (28) und der Getriebeübersetzung ermittelt werden, die ermittelten Ist-Werte mit den Soll-Werten der geladenen Kennlinie (BL, BK) verglichen werden, ein Korrekturwert (K) für die Stellgröße des Aktors (28) basierend auf dem Vergleich der ermittelten Ist- und Soll-Werte generiert wird, eine Betriebskennlinie (BK) basierend auf den ermittelten Korrekturwerten (K) und der geladenen Kennlinie (BL, BK) generiert wird, und die Betriebskennlinie (BK) in der Steuereinheit (30) gespeichert wird, wobei bei einem Start der Arbeitsmaschine (10) jeweils die aktuellste in der Steuereinheit (30) hinterlegte Kennlinie (BL, BK), die Betriebskennlinie (BK), zur Steuerung des Getriebes (24) geladen wird.

9. Landwirtschaftliche Arbeitsmaschine nach Anspruch 8, **dadurch gekennzeichnet, dass** der Aktor (28) eine drehbare Verstellwalze (34) zur Steuerung des Getriebes (24) aufweist, wobei die Stellgröße des Aktors (28) der Drehwinkel der Verstellwalze (34) ist.

10. Landwirtschaftliche Arbeitsmaschine nach Anspruch 8 oder 9, **dadurch gekennzeichnet, dass** das Sensormittel (48) zur Erfassung der Stellgröße des Aktors (28) ein Drehwinkelsensor (42) ist und zur Erfassung der Getriebeübersetzung jeweils ein Drehzahlsensor (44) für die Eingangsdrehzahl und die Ausgangsdrehzahl des Getriebes (24) vorgesehen sind.

11. Landwirtschaftliche Arbeitsmaschine nach einem der Ansprüche 8 bis 10, **dadurch gekennzeichnet, dass** das Getriebe (24) ein stufenloses hydrostatisches Getriebe ist und mindestens ein Drucksensor (46) in einem geschlossenen Hydraulikkreislauf des Getriebes (24) vorgesehen ist.

## Claims

1. A method of transmission control for an agricultural working machine (10) comprising a stepless, in particular hydrostatic, transmission (24) which has an actuator (28) for setting a transmission ratio of the transmission (24), a control unit (30) for controlling the actuator (28), and sensor means (48) connected to the control unit (30) for detecting an adjusting variable of the actuator (28) and a transmission ratio, wherein a base characteristic curve (BL) for controlling the transmission (24) is stored in the control unit (30), wherein the base characteristic curve (BL) represents a theoretical relationship between the adjusting variable of the actuator (28) and the transmission ratio,
**characterised by** the method steps:
- loading a characteristic curve (BL, BK) stored in the control unit (30) when starting the agricultural working machine (10) for control of the transmission (24), wherein the values of the loaded characteristic curve (BL, BK) are assumed as target values,
- ascertaining the actual values of the adjusting variable of the actuator (28) and the transmission ratio,
- comparing the ascertained actual values to the target values of the loaded characteristic curve (BL, BK),
- generating a correction value (K) for the adjusting variable of the actuator (28) based on the comparison of the ascertained actual and target values,
- generating an operating characteristic curve (BK) based on the ascertained correction values (K) and the loaded characteristic curve (BL, BK), and
- storing the operating characteristic curve (BK) in the control unit,
wherein upon a start of the working machine (10) the respective most up-to-date characteristic curve (BL, BK) stored in the control unit (10), the operating characteristic curve (BK), is loaded to control the transmission (24).

2. A method according to claim 1 **characterised in that** upon storage of the generated operating characteristic curve (BK) the previous stored operating characteristic curve (BK) is overwritten.

3. A method according to one of the preceding claims **characterised in that** the step of ascertaining the adjusting variable of the actuator (30) and the associated transmission ratio are effected cyclically.

4. A method according to one of the preceding claims **characterised in that** an ascertained correction value (K) for the adjusting variable of the actuator (28) is taken into consideration only if the transmission (24) is power-transmittingly connected to the drive engine (22) and at least one axle, the transmission (24) has no load within predetermined limits and/or the dynamic processes in the transmission (24) have abated.

5. A method according to one of the preceding claims **characterised in that** an ascertained correction value (K) for the adjusting variable of the actuator (30) is taken into consideration only if the deviation in the correction value (K) relative to the base characteristic curve (BL) is within a predetermined limit and/or the gradient of the base characteristic curve (BL) is maintained within a predetermined limit.

6. A method according to one of claims 4 and 5 **characterised in that** the predetermined limits are of a uniform or variable value in relation to the base characteristic curve (BL).

7. A method according to one of the preceding claims **characterised in that** a limit value is predetermined for a correction value (K), wherein when the limit value is exceeded an indication of the limit value being exceeded is output.

8. An agricultural working machine, in particular for carrying out the method according to one of claims 1 to 7, comprising a stepless, in particular hydrostatic, transmission (24) which has an actuator (28) for setting a transmission ratio of the transmission (24), a control unit (30) for controlling the actuator (28), and sensor means (48) connected to the control unit (30) for detecting an adjusting variable of the actuator (28) and a transmission ratio, wherein a base characteristic curve (BL) for controlling the transmission (24) can be stored in the control unit (30),
**characterised in that**
the control unit (30) is so designed and adapted that a characteristic curve (BL, BK) stored in the control unit (30) is loaded upon starting of the agricultural working machine (10) for controlling the transmission (24), wherein the values of the loaded characteristic curve (BL, BK) are assumed as target values, actual values of the adjusting variable of the actuator (28) and the transmission ratio are ascertained, the ascertained actual values are compared to the target values of the loaded characteristic curve (BL, BK), a correction value (K) for the adjusting variable of the actuator (28) is generated based on the comparison of the ascertained actual and target values, an operating characteristic curve (BK) is generated based on the ascertained correction values (K) and the loaded characteristic curve (BL, BK) and the operating characteristic curve (BK) is stored in the control unit (30), wherein upon a start of the working machine (10) the respective most up-to-date characteristic curve (BL, BK) stored in the control unit (10) the operating characteristic curve (BK), is loaded to control the transmission (24).

9. An agricultural working machine according to claim 8 **characterised in that** the actuator (28) has a rotatable adjusting roller (34) for control of the transmission (24), wherein the adjusting variable of the actuator (28) is the rotary angle of the adjusting roller (34).

10. An agricultural working machine according to claim 8 or claim 9 **characterised in that** the sensor means (48) for detecting the adjusting variable of the actuator (28) is a rotary angle sensor (42) and a respective rotary speed sensor (44) for the input speed and the output speed of the transmission (24) are provided for detecting the transmission ratio.

11. An agricultural working machine according to one of claims 8 to 10 **characterised in that** the transmission (24) is a stepless hydrostatic transmission and at least one pressure sensor (46) is provided in a closed hydraulic circuit of the transmission (24).

## Revendications

1. Procédé de commande de transmission pour une machine de travail agricole (10), comprenant une transmission automatique, en particulier hydrostatique, à fonctionnement continu (24) qui comporte un actionneur (28) pour régler un rapport de transmission de la transmission (24), une unité de commande (30) pour commander l'actionneur (28) ainsi qu'un moyen de capteur (48) relié à l'unité de commande (30) pour détecter une grandeur de réglage de l'actionneur (28) et un rapport de transmission, dans l'unité de commande (30) étant mémorisée une courbe caractéristique de base (BL) pour commander la transmission (24), la courbe caractéristique de base (BL) représentant la relation théorique entre la grandeur de réglage de l'actionneur (28) et le rapport de transmission, **caractérisé par** les étapes de procédé
- chargement d'une courbe caractéristique (BL, BK) enregistrée dans l'unité de commande (30) lors du démarrage de la machine de travail agricole (10) pour commander la transmission (24), les valeurs de la courbe caractéristique chargée (BL, BK) étant considérées comme valeurs de consigne,
- détermination des valeurs réelles de la grandeur de réglage de l'actionneur (28) et du rapport de transmission,
- comparaison des valeurs réelles déterminées avec les valeurs de consigne de la courbe caractéristique chargée (BL, BK),
- génération d'une valeur corrective (K) pour la grandeur de réglage de l'actionneur (28) sur la base de la comparaison des valeurs réelles et de consigne déterminées,
- génération d'une courbe caractéristique d'exploitation (BK) sur la base des valeurs correctives déterminées (K) et de la courbe caractéristique chargée (BL, BK),
- mémorisation de la courbe caractéristique d'exploitation (BK) dans l'unité de commande, lors d'un démarrage de la machine de travail (10), respectivement la courbe caractéristique (BL, BK) la plus actuelle enregistrée dans l'unité de commande (30), la courbe caractéristique d'exploitation (BK), étant chargée pour commander la transmission (24).

2. Procédé selon la revendication 1, **caractérisé en ce que**, lors de la mémorisation de la courbe caractéristique d'exploitation générée (BK), la courbe caractéristique d'exploitation précédente mémorisée (BK) est écrasée.

3. Procédé selon une des revendications précédentes, **caractérisé en ce que** la détermination de la valeur de réglage de l'actionneur (30) et l'adoption du rapport de transmission correspondant s'effectuent cycliquement.

4. Procédé selon une des revendications précédentes, **caractérisé en ce qu'**une valeur corrective déterminée (K) pour la grandeur de réglage de l'actionneur (28) n'est prise en compte que si la transmission (24) est reliée par complémentarité de forces avec le moteur d'entraînement (22) et au moins un essieu, si la transmission (24) est sans charge dans des limites prédéfinies et/ou si des processus dynamiques dans la transmission (24) ont disparu.

5. Procédé selon une des revendications précédentes, **caractérisé en ce qu'**une valeur corrective déterminée (K) pour la grandeur de réglage de l'actionneur (30) n'est prise en compte que si l'écart de la valeur corrective (K) à la courbe caractéristique de base (BL) se trouve à l'intérieur d'une limite prédéfinie et/ou si la pente de la courbe caractéristique de base (BL) est maintenue dans une limite prédéfinie.

6. Procédé selon une des revendications 4 ou 5, **caractérisé en ce que** les limites prédéfinies présentent une valeur constante ou variable par rapport à la courbe caractéristique de base (BL).

7. Procédé selon une des revendications précédentes, **caractérisé en ce qu'**une valeur limite est prédéfinie pour une valeur corrective (K), un signal de surpassement étant émis en cas de surpassement de la valeur limite.

8. Machine de travail agricole, en particulier pour mettre en œuvre le procédé selon une des revendications 1 à 7, comprenant une transmission automatique, en particulier hydrostatique, à fonctionnement continu (24) qui comporte un actionneur (28) pour régler un rapport de transmission de la transmission (24), une unité de commande (30) pour commander l'actionneur (28) ainsi qu'un moyen de capteur (48) relié à l'unité de commande (30) pour détecter une grandeur de réglage de l'actionneur (28) et un rapport de transmission, dans l'unité de commande (30) étant mémorisable une courbe caractéristique de base (BL) pour commander la transmission (24), **caractérisée en ce que** l'unité de commande (30) est conçue et configurée de façon qu'une courbe caractéristique (BL, BK) enregistrée dans l'unité de commande (30) soit chargée lors du démarrage de la machine de travail agricole (10) pour commander la transmission (24), les valeurs de la courbe caractéristique chargée (BL, BK) étant considérées comme valeurs de consigne, des valeurs réelles de la grandeur de réglage de l'actionneur (28) et du rapport de transmission étant déterminées, les valeurs réelles déterminées étant comparées avec les valeurs de consigne de la courbe caractéristique chargée (BL, BK), une valeur corrective (K) pour la grandeur de réglage de l'actionneur (28) étant générée sur la base de la comparaison des valeurs réelles et de consigne déterminées, une courbe caractéristique d'exploitation (BK) étant générée sur la base des valeurs correctives déterminées (K) et de la courbe caractéristique chargée (BL, BK), et la courbe caractéristique d'exploitation (BK) étant mémorisée dans l'unité de commande (30), lors d'un démarrage de la machine de travail (10), respectivement la courbe caractéristique (BL, BK) la plus actuelle enregistrée dans l'unité de commande (30), la courbe caractéristique d'exploitation (BK), étant chargée pour commander la transmission (24).

9. Machine de travail agricole selon la revendication 8, **caractérisée en ce que** l'actionneur (28) comporte un rouleau de réglage rotatif (34) pour commander la transmission (24), la grandeur de réglage de l'actionneur (28) étant l'angle de rotation du rouleau de réglage (34).

10. Machine de travail agricole selon la revendication 8 ou 9, **caractérisée en ce que** le moyen de capteur (48) pour détecter la grandeur de réglage de l'actionneur (28) est un capteur d'angle de rotation (42) et, pour détecter le rapport de transmission, un capteur de vitesse de rotation (44) pour la vitesse de rotation d'entrée et pour la vitesse de rotation de sortie de la transmission (24) sont respectivement prévus.

11. Machine de travail agricole selon une des revendications précédentes 8 à 10, **caractérisée en ce que** la transmission (24) est une transmission automatique hydrostatique à fonctionnement continu, et au moins un capteur de pression (46) est prévu dans un circuit hydraulique fermé de la transmission (24).
